# FASCICULE DE BREVET EUROPEEN

(11) **EP 1 891 428 B1**
(45) Date de publication et mention de la délivrance du brevet: **25.08.2010**
(21) Numéro de dépôt: 06764714.9
(22) Date de dépôt: 31.05.2006
(51) Int. Cl.: G01N 29/26, G01N 29/265, G01N 29/34, G01N 29/04, G01N 29/24, G10K 11/34, B06B 1/06

(54) **PROCEDE DE CONTROLE DE L'ETAT D'UN ARBRE D'ENTRAINEMENT DE MACHINE TOURNANTE.**
VERFAHREN ZUR INSPEKTION DES ZUSTANDS EINER ANTRIEBSWELLE EINER ROTATIONSMASCHINE
METHOD FOR INSPECTING THE STATE OF A ROTATING MACHINE DRIVE SHAFT

(30) Priorité: 01.06.2005 FR 0551459
(43) Date de publication de la demande: 27.02.2008
(73) Titulaire: JSPM, 59753 Jeumont (FR)
(72) Inventeur: BURAT, Olivier, Pierre, F-71640 Givry (FR); CAVALIER, Jean, Joseph, F-59600 Maubeuge (FR)
(74) Mandataire: Lebkiri, Alexandre
(86) Numéro de dépôt international: PCT/FR2006/001245
(87) Numéro de publication internationale: WO 2006/129019

(56) Documents cités:
- US-A- 4 497 210
- US-A- 4 893 511
- MAHAUT S ET AL: "Ultrasonic defect characterization with a dynamic adaptive focusing system" ULTRASONICS, IPC SCIENCE AND TECHNOLOGY PRESS LTD. GUILDFORD, GB, vol. 34, no. 2, juin 1996 (1996-06), pages 121-124, XP004035604 ISSN: 0041-624X
- PATENT ABSTRACTS OF JAPAN vol. 2003, no. 12, 5 décembre 2003 (2003-12-05) -& JP 2004 340809 A (MITSUBISHI HEAVY IND LTD), 2 décembre 2004 (2004-12-02)

## Description

La présente invention a pour objet un procédé de contrôle de l'état d'un arbre d'entraînement de machine tournante. Elle a essentiellement pour but de proposer une solution pour réaliser un contrôle non destructif de l'état d'un arbre d'entraînement dont une unique extrémité est accessible pour réaliser ledit contrôle.

L'invention sera plus particulièrement décrite dans le cadre d'une pompe primaire de réacteur nucléaire, ladite pompe primaire comportant notamment une roue entraînée par un moteur électrique par l'intermédiaire d'un arbre d'entraînement à contrôler ; mais le procédé selon l'invention peut être mis en oeuvre pour contrôler l'état de tout arbre plein, notamment des arbres en acier au carbone ou en acier inoxydable, intervenant dans une machine tournante, soumis à des contraintes thermiques, mécaniques ou autres susceptibles d'endommager ledit arbre.

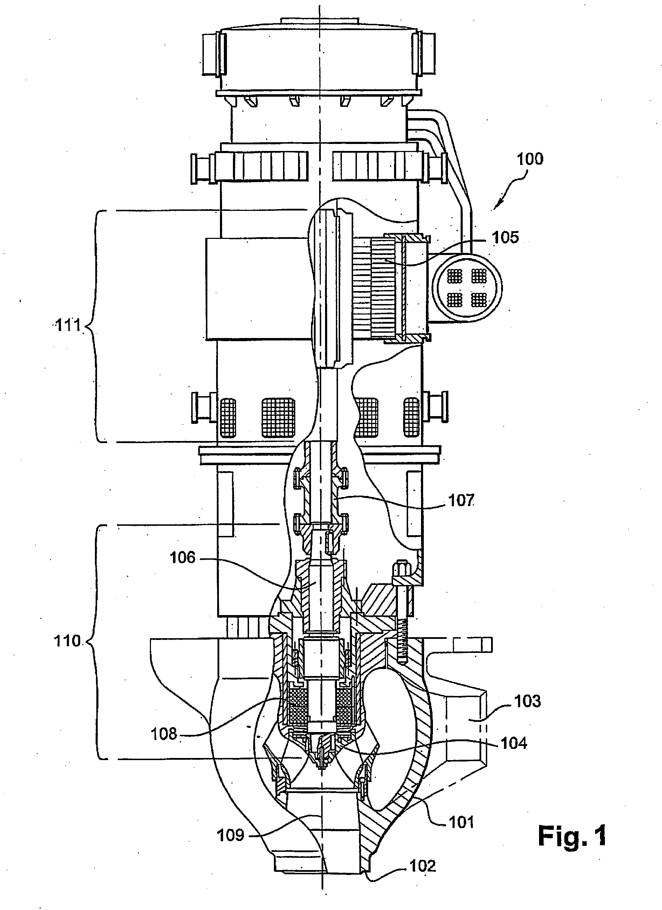

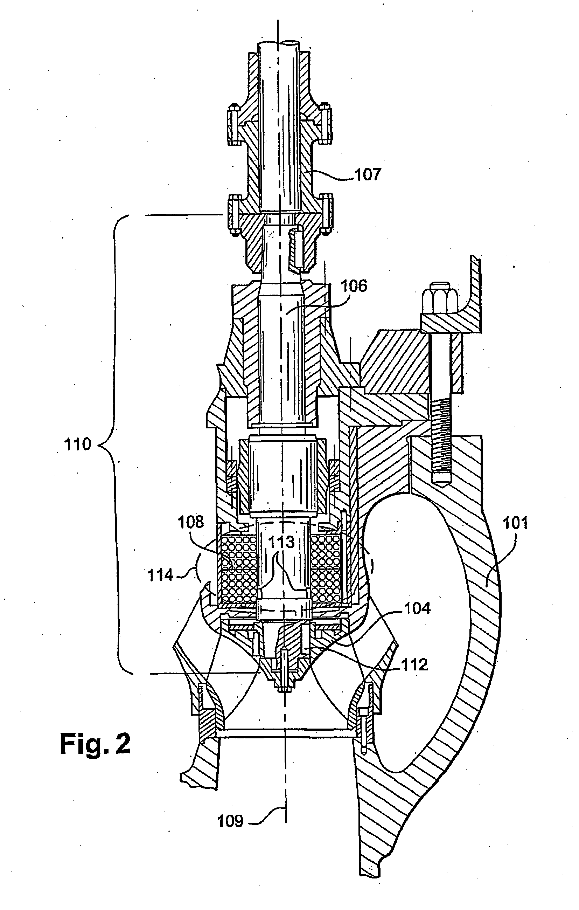

Le domaine dans lequel sera plus particulièrement détaillée la mise en oeuvre du procédé selon l'invention est celui des pompes primaires de réacteur nucléaire refroidi par de l'eau sous pression. Un exemple d'une telle pompe, actuellement utilisée, est décrit en référence aux figures 1 et 2.

La figure 1 montre une pompe 100 - dite pompe primaire - habituellement utilisée dans les réacteurs nucléaires refroidis par de l'eau sous pression ; la pompe primaire 100 sert à mettre en circulation, dans le circuit de refroidissement - dit circuit primaire - du réacteur nucléaire l'eau sous pression de refroidissement du réacteur nucléaire. La pompe 100 comporte notamment :
- un corps de pompe 101, relié par l'intermédiaire d'une première tubulure 102 à une première canalisation du circuit primaire, et par une seconde tubulure 103 à une seconde canalisation du réacteur nucléaire ; la pompe 100 met l'eau en circulation entre ces deux tubulures en établissant une certaine pression ;
- une roue 104, entraînée par un moteur électrique 105 ;
- un arbre d'entraînement 106, présentant une partie inférieure 110 - dite arbre de pompe, cette partie inférieure pouvant elle-même être considérée comme un arbre d'entraînement - fixée à la roue 104, et une partie supérieure - dite arbre moteur - reliée, par l'intermédiaire d'un accouplement 107 - dit arbre intermédiaire - au rotor du moteur électrique 105 ; l'arbre d'entraînement 106, plus particulièrement l'arbre de pompe 110, est de forme globalement cylindrique, bien qu'il soit constitué, en considérant une direction axiale 109, d'une succession de parties de diamètre légèrement différent, permettant ainsi la mise en place et le logement de différents éléments, notamment de la roue 104 de pompe ou d'une bague de protection thermique; les différences de diamètre existant sont cependant suffisamment faibles pour qualifier l'arbre d'entraînement d'arbre globalement cylindrique ;

- un ensemble de moyens de refroidissement, de guidage en rotation de l'arbre 106, et d'étanchéité disposés à la périphérie de l'arbre d'entraînement 106 ; ces moyens comprennent notamment une barrière thermique 108, constituée par un réseau de tubes parcourus par un fluide de refroidissement, et disposée autour d'une partie inférieure de l'extrémité inférieure de l'arbre de pompe 110 ;
- une pluralité de moyens d'assemblage, notamment des clavettes 112 de solidarisation enfoncées dans un évidemment ménagé dans la partie inférieure de l'arbre de pompe 110, ou des broches de fixation 113 ou d'arrêt en rotation, introduites dans des évidements ménagés dans l'arbre d'entraînement au niveau de l'endroit où est placée la barrière thermique 108.

L'extrémité inférieure de l'arbre de pompe 110 est amenée à être plongée dans de l'eau sous pression à une température de l'ordre de 280 °C (degrés Celsius). Par ailleurs, en fonctionnement normal, de l'eau froide- à une température inférieure à 55°C - est injectée au niveau de la barrière thermique 108 pour former un barrage entre le circuit primaire et les moyens d'étanchéité de l'arbre. Dans ces conditions, il existe une zone de transition 114 entre l'arbre d'entraînement et la barrière thermique soumise à d'importantes variations de température dues au mélange d'eau du circuit primaire à 280 °C et de l'eau d'injection à 55 °C ; la partie correspondante de l'arbre est ainsi soumise à d'importantes contraintes thermiques, susceptibles d'entraîner l'apparition de fissures ou d'un phénomène de faïençage dans cette partie de l'arbre, même en cas d'ajouts de bagues thermiques. Les fissures d'origine thermique sont multiples et en réseau. Les fissures les plus profondes ont une orientation préférentielle axiale.

Outre les fissures d'origine thermique, on observe également des fissures d'origine mécanique: ces dernières apparaissent soit dans les changements de section, soit au niveau des trous de broche d'arrêt 113 en rotation de pièces rapportées sur l'arbre d'entraînement 106, soit au niveau des rainures de clavettes, par exemple des clavettes 112. Elles présentent une orientation préférentielle transversale. Il n'y a généralement pas de fissures multiples sauf dans le cas de perçage de trous de broche multiples. Par ailleurs, l'arbre d'entraînement 106 présente des risques de rupture en torsion au niveau des changements de section rencontrés le long de l'arbre.

Ainsi, les défauts recherchés, qu'ils résultent d'une fatigue d'origine mécanique ou d'origine thermique ou encore mixte, naissent en surface et se propagent vers l'intérieur de la pièce de façon progressive. Ils se situent principalement dans la partie basse de la pompe primaire, partie soumise à des gradients de température importants.

Dans l'état de la technique, on a proposé différentes solutions pour détecter l'apparition de tels défauts au niveau de la partie basse de l'arbre de pompe 110. Notamment, on a proposé plusieurs procédés de contrôle faisant intervenir des transducteurs à ultrasons. De tels transducteurs émettent des faisceaux ultrasons dans l'arbre ; ces faisceaux sont réfléchis notamment au niveau des défauts, précédemment mentionnés, de l'arbre ; ils sont alors reçus par les transducteurs à ultrasons qui sont couplés à un ensemble de moyens de traitement de signaux pour les interpréter, et détecter ainsi au mieux l'existence et le positionnement desdits défauts. Dans tous les procédés de contrôle, on dépose l'arbre intermédiaire reliant l'arbre de pompe à l'arbre du moteur, pour rendre accessible une extrémité supérieure de l'arbre de pompe.

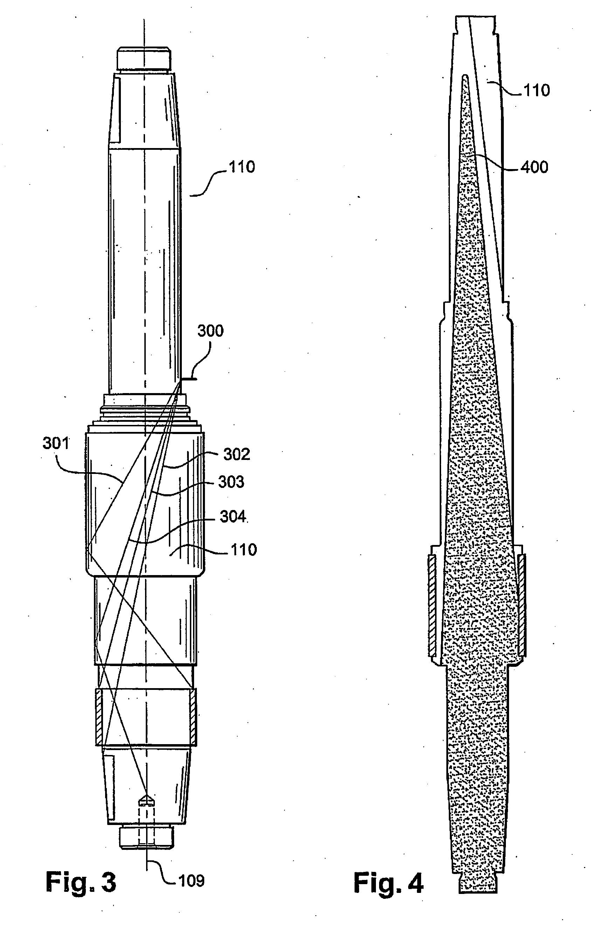

Une première famille de solutions réside dans l'utilisation d'ondes ultrasonores transversales. Un tel exemple de solution est illustré à la figure 3, sur laquelle un arbre d'entraînement comparable à l'arbre de pompe 110 est contrôlé. Dans cette méthode, on place un transducteur - ou capteur - à ultrasons au niveau d'un point d'engrenage 300, en contact avec l'arbre de pompe 110 ; en fonction de la position du capteur, on peut atteindre différents points à contrôler, éventuellement après une ou plusieurs réflexions au niveau de la surface de l'arbre d'entraînement, le faisceau pouvant prendre différentes trajectoires dont différents exemples sont respectivement référencées 301, 302, 303 et 304 pour atteindre chacune un point à contrôler. Les capteurs utilisés sont, le plus souvent, des transducteurs monoéléments parallélépipédiques munis d'un sabot permettant de dévier le faisceau d'un angle pouvant atteindre environ 75° par rapport à l'axe de l'arbre.

Cette méthode a l'avantage de pouvoir localiser en hauteur et angulairement les défauts: un mouvement en rotation du transducteur autour de l'arbre d'entraînement permet de balayer une circonférence de l'arbre déterminée en hauteur par un positionnement axial approprié du transducteur. Mais les transducteurs transversaux doivent être utilisés au plus près de la zone à contrôler ; ils doivent être disposés dans des positions plus basses que les positions directement accessibles de l'arbre de pompe ; un déshabillage de l'arbre de pompe est alors nécessaire, ce qui complique l'opération de contrôle, notamment dans le cas des pompes primaires nucléaires. De tels transducteurs présentent également l'inconvénient d'avoir une grande ouverture de faisceau, donc une résolution faible, mettant, en évidence uniquement des défauts transversaux relativement importants. Les défauts axiaux de fatigue thermique ne sont pas détectables.

Par ailleurs, il est nécessaire d'utiliser un sabot pour placer le transducteur selon une orientation donnée et ainsi obtenir un angle d'incidence souhaité, ce qui complique encore l'opération de contrôle. Ensuite, la présence de bagues thermiques empêche le positionnement du transducteur au niveau correspondant de l'arbre. Enfin, pour le contrôle des points les plus bas, il peut être nécessaire de recourir à plusieurs réflexions du faisceau ultrasonore, ce qui implique une perte d'énergie importante, limitant en conséquence la résolution de l'information de retour. Ainsi, plus la longueur de l'arbre est importante, plus la méthode s'applique difficilement.

Une seconde famille de solutions réside dans l'utilisation d'ondes longitudinales, comme présente dans le document US 4,893,511. Ces méthodes de contrôles font appel à des transducteurs qui émettent un faisceau ultrasons divergeant 400, visible à la figure 4, dont la largeur à grande distance, c'est à dire à environ trois mètres, est contenue dans le diamètre de l'arbre de pompe 110. Ces solutions font appel à des transducteurs de type monoéléments cylindriques, monoéléments annulaires, ou encore à des transducteurs annulaires à deux éléments ou à deux groupes d'éléments séparés, avec un élément ou un groupe d'éléments utilisés en émission, et un élément ou un groupe d'éléments utilisés en réception.

Ces contrôles permettent de mettre en évidence des défauts transversaux importants, de les localiser en hauteur dans l'arbre. Mais il n'est pas possible de les positionner précisément angulairement sur la périphérie de l'arbre. Les fissures d'origine mécanique transversales de faible surface réfléchissante sont difficiles à mettre en évidence, la résolution étant liée au rapport de la surface du défaut sur la surface du faisceau dans le même pian.

De plus, les défauts axiaux ne sont pas détectables, l'énergie émise n'étant jamais suffisante pour être diffractée en quantité suffisante vers les transducteurs par l'extrémité supérieure des défauts axiaux.

Le contrôle avec ce type de transducteur peut être amélioré par l'ajout de lentilles acoustiques qui améliorent la résolution et la localisation des défauts sur la périphérie, mais qui présentent l'inconvénient d'avoir une focalisation donnée, correspondant à une distance unique, ce qui implique d'avoir autant de capteurs que de hauteurs différentes à examiner. De plus, les défauts axiaux demeurent non détectables par ces transducteurs améliorés.

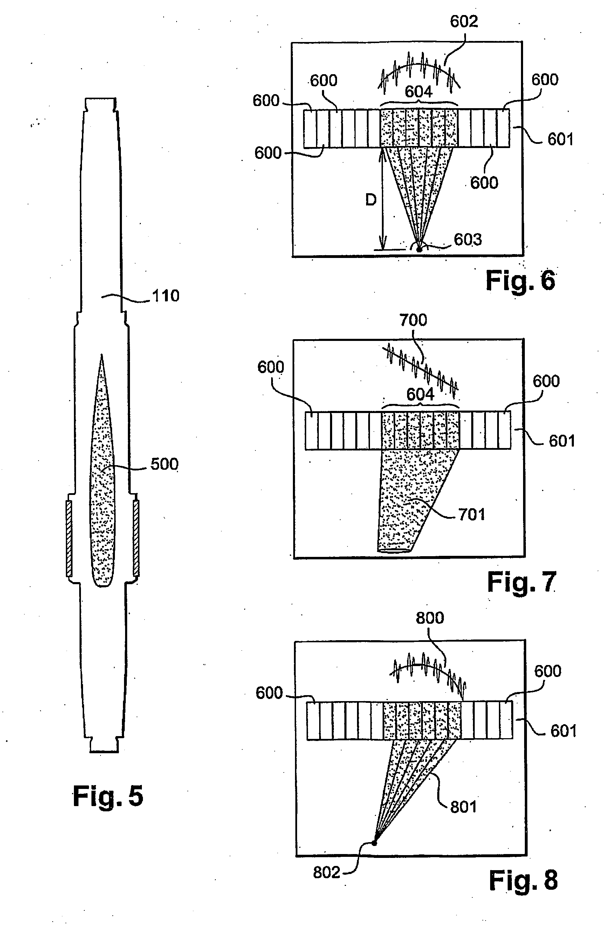

Enfin, il faut noter que le fonctionnement qui vient d'être décrit correspond à un principe d'utilisation théorique, inhérent à la technologie des transducteurs ultrasonores dans des milieux homogènes et isotropes. Or, les arbres forgés, et particulièrement les arbres en acier inoxydable austénitique ou austénoferritique, présents notamment dans les pompes primaires de réacteurs nucléaires, présentent une zone d'hétérogénéité 500, visible à la figure 5, de structure métallurgique ; on trouve ces hétérogénéités notamment dans les parties les plus épaisses ; elles sont variables d'un arbre à l'autre en fonction de la composition chimique, de la gamme de forgeage et de la gamme de traitements thermiques appliquées.

Ainsi, dans les parties épaisses de ces arbres, la structure métallurgique est perturbée et reste grossière, ce qui conduit à une forte rétrodiffusion des ondes ultrasonores. Cette particularité conduit à perturber et à atténuer la puissance d'émission et de réception des transducteurs classiques décrits ci-dessus. La structure métallurgique est cependant fine en périphérie où la transmission ultrasonore est satisfaisantes

Cet état de fait est aggravé dans l'utilisation des transducteurs à ondes transversales dont le faisceau traverse obligatoirement deux fois cette zone d'hétérogénéité pour les arbres courts, c'est à dire inférieurs à 2 mètres, et davantage encore pour les arbres longs, c'est à dire pouvant atteindre 3,5 mètres, en considérant les trajectoires aller et retour des faisceaux ultrasonores.

Le dispositif selon l'invention répond aux différents problèmes qui viennent d'être exposés. Dans l'invention, on propose de former un faisceau ultrasonore en dehors des zones métallurgiquement perturbées et de contourner cette zone pour toute opération de contrôle. A cet effet, on propose dans l'invention de réaliser un contrôle non destructif d'un arbre d'entraînement accessible par une seule des extrémités en ondes longitudinale, au moyen d'un transducteur ultrasonore annulaire multiéléments.

Un tel transducteur est composé d'éléments indépendants pouvant être excités par des impulsions électriques de même fréquence, mais pour lesquels on va procéder, dans l'invention, à l'application de différents déphasages électroniques au niveau des impulsions qui leur sont transmises. Un tel déphasage électronique permet de focaliser ou de défléchir un faisceau final synthétisé par l'ensemble des éléments constituant le transducteur, ledit faisceau final étant concentré pour adopter une forme globalement cylindrique de section nettement inférieure à la section de l'arbre à contrôler. Le faisceau final est fortement énergétique à longue distance, grâce notamment à un effet de guide d'ondes engendré par la géométrie cylindrique de l'arbre.

Des transducteurs du type reseau en phase sont connus par example du documents US 4,497,210, JP 2004340809 et Mahout S. et al.: "Ultrasonic defect characterization with a dynamic adaptive focusing system", Ultrasonics, vol. 34, no. 2, juin 1996, pages 121-124.

L'invention concerne donc essentiellement un procédé de contrôle d'un arbre d'entraînement d'une machine tournante, ledit arbre étant plein, de forme globalement cylindrique caractérisé en ce que le procédé comporte les différentes étapes consistant à :
- disposer, au niveau d'une extrémité de l'arbre à contrôler, un transducteur annulaire constitué d'une pluralité d'éléments indépendants, chaque élément étant apte à au moins émettre un faisceau élémentaire ultrasonore en ondes longitudinales dans l'arbre d'entraînement ;
- appliquer une première loi de focalisation, préalablement déterminée, à au moins une partie des éléments constituant le transducteur annulaire, la première loi de focalisation consistant en un ensemble de retards en émission à respecter entre les différents éléments du transducteurs, pour générer un premier faisceau final de forme globalement cylindrique et défléchi selon un angle recherché pour cibler un premier secteur particulier de l'arbre d'entraînement à contrôler.

Le procédé selon l'invention peut, en complément des caractéristiques principales qui viennent d'être mentionnées, présenter une ou plusieurs des caractéristiques complémentaires suivantes :
- le procédé comporte l'étape complémentaire consistant à modifier la première loi de focalisation pour obtenir une deuxième loi de focalisation générant un deuxième faisceau final pour cibler un deuxième secteur particulier de l'arbre d'entraînement à contrôler ; en modifiant ainsi la première loi de focalisation, et en provoquant ainsi une modification d'une déflexion du faisceau final, on peut atteindre le deuxième secteur à contrôler situé en amont ou en aval du premier secteur à contrôler. Une simple gestion électronique des retards à appliquer permet ainsi d'avoir accès à l'ensemble des zones à contrôler ;
- le procédé comporte l'étape supplémentaire consistant à faire évoluer en rotation, au moyen d'un moteur et autour d'un axe central de l'arbre d'entraînement, le transducteur annulaire ;
- le procédé comporte l'étape supplémentaire consistant à appliquer la première loi de focalisation à plusieurs reprises, en décalant à chaque reprise d'au moins un même nombre d'éléments chaque retard de ladite loi de focalisation ;
- le transducteur annulaire intervenant dans ledit procédé comporte huit éléments indépendants répartis en un unique anneau ;
- le procédé comporte l'étape complémentaire consistant à :
   - appliquer un premier retard sur un premier élément et un deuxième retard sur un deuxième élément, le deuxième retard étant supérieur ou égal au premier retard;
   - appliquer un troisième retard sur un troisième élément, un quatrième retard sur un quatrième élément, un cinquième retard sur un cinquième élément, un sixième retard sur un sixième élément, le sixième retard étant égal au cinquième retard, lui-même supérieur au quatrième retard, lui-même égal au troisième retard, lui-même supérieur au deuxième retard;
   - appliquer un septième retard sur un septième élément, et un huitième retard sur un huitième élément, le huitième retard étant égal au septième retard, lui-même supérieur au sixième retard, pour générer un septième faisceau élémentaire et un huitième faisceau élémentaire, concentré vers une tache de focalisation circulaire, et créer ainsi, en aval de la tache de focalisation, le faisceau final de forme globalement cylindrique ;
- le premier élément, le troisième élément, le septième élément et le cinquième élément sont placés consécutivement sur une première moitié du transducteur annulaire, en étant respectivement symétriques, par rapport à un plan perpendiculaire à une surface d'émission du transducteur circulaire et centré sur ledit transducteur, au deuxième élément, au quatrième élément, au huitième élément et au sixième élément ;
- le transducteur annulaire intervenant dans ledit procédé comporte un premier anneau externe, disposé en périphérie du transducteur, et un second anneau interne, disposé à proximité du centre du transducteur, le premier anneau et le second anneau étant concentriques ;
- le transducteur annulaire comporte trente deux éléments indépendants, le premier anneau et le second anneau comportant chacun seize éléments ;
- les retards appliqués pour générer deux faisceaux élémentaires consécutifs sont de l'ordre de la centaine de nanosecondes ;
- la somme des retards constituant l'ensemble des retards de la première loi de focalisation est inférieure à une durée d'émission du faisceau élémentaire émis par chaque élément constituant le transducteur annulaire ;
- l'arbre d'entraînement est un arbre de roue d'une pompe primaire de réacteur nucléaire.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, déjà décrite, une vue en coupe partielle d'une pompe primaire d'un réacteur nucléaire à eau sous pression, faisant intervenir un exemple d'arbre d'entraînement destiné à être contrôlée au moyen du procédé selon l'invention ;
- à la figure 2, également déjà décrite, une vue à plus grande échelle en coupe de l'arbre d'entraînement visible à la figure 1 ;
- à la figure 3, également déjà décrite, une représentation schématique d'un premier procédé de contrôle, selon l'état de la technique, d'un arbre d'entraînement ;
- à la figure 4, également déjà décrite, une représentation schématique d'un deuxième procédé de contrôle, selon l'état de la technique, d'un arbre d'entraînement ;
- à la figure 5, également déjà décrite, une représentation schématique d'un arbre d'entraînement à contrôler au moyen du procédé selon l'invention ;
- à la figure 6, une illustration schématique du principe de focalisation électronique ;
- à la figure 7, une illustration schématique du principe de déflexion électronique ;
- à la figure 8, une illustration schématique de la combinaison des principes de focalisation et de déflexion électronique ;
- à la figure 9, un premier exemple de réalisation simplifiée de transducteur utilisé dans une mise en oeuvre du procédé selon l'invention ;
- à la figure 10, un deuxième exemple de réalisation de transducteur utilisé dans une mise en oeuvre du procédé selon l'invention ;
- à la figure 11, une représentation schématique d'une mise en oeuvre du procédé selon l'invention dans le cadre d'un contrôle statique ;
- à la figure 12, une représentation schématique d'une mise en oeuvre du procédé selon l'invention dans le cadre d'un contrôle dynamique.

Sur les différentes figures, les éléments qui sont communs à plusieurs figures auront conservé, sauf précision contraire, les mêmes références.

Dans le procédé selon l'invention, on utilise les principes de focalisation électronique et de déflexion électronique, respectivement illustrées aux figures 6 et 7, pour réaliser le contrôle de l'état d'un arbre d'entraînement.

Le principe de focalisation électronique, dans l'exemple représenté à la figure 6, consiste en l'utilisation de retards électroniques appliqués en émission sur une pluralité d'éléments indépendants 600 constituant un transducteur rectiligne 601. On applique une loi de retard 602 - ou loi de localisation - sur un groupe 604 d'éléments indépendants 600 consécutifs. D'une façon générale, l'application d'une loi de retard sur un transducteur multiéléments consiste en l'émission d'une impulsion électrique unique, ladite impulsion étant répartie sur plusieurs voies, chacune des voies aboutissant à un élément distinct du transducteur considéré ; chacune des voies présente par ailleurs un ensemble de moyens, du type capacité ou inductances, qui permettent d'obtenir, en sortie de la voie considérée, un retard qui lui est propre.

La loi de retard 602 consiste à émettre en premier les faisceaux ultrasonores des éléments situés en périphérie du groupe 604 d'éléments indépendants visé. Des retards sont ensuite appliqués aux autres éléments indépendants du groupe 604 ; le retard appliqué à chaque élément indépendants est une fonction croissante de l'éloignement de l'élément considéré par rapport à la périphérie du groupe 604 d'éléments indépendants visé : plus l'élément indépendant occupe une position centrale, plus le retard qui lui est appliqué est important. On obtient ainsi un point de focalisation 603, situé à une distance de focalisation D du transducteur 601 considéré. La distance de focalisation D dépend essentiellement de l'amplitude de la loi de retard 602.

Le principe de déflexion électronique, dans l'exemple représenté à la figure 7, est encore illustré au moyen de la pluralité d'éléments indépendants 600 constituant le transducteur rectiligne 601. Là encore, on fait intervenir des retards électroniques appliqués en émission sur le groupe visé 604 d'éléments indépendants 600 consécutifs. On applique une loi de retard 700 qui consiste à émettre en premier le faisceau ultrasonore de l'élément situé à une des extrémités du groupe 604, l'extrémité droite dans l'exemple considéré. Des retards sont ensuite appliqués aux autres éléments indépendants du groupe 604; le retard appliqué à chaque élément indépendant est une fonction croissante de l'éloignement de l'élément considéré par rapport à l'élément sur lequel on a appliqué la première impulsion électrique : plus l'élément indépendant occupe une position éloignée du premier élément excité par une impulsion électrique, plus le retard qui lui est appliqué est important. On obtient ainsi un faisceau global défléchi dans une direction correspondant à la position du dernier élément ayant émis un faisceau ultrasonore.

Dans la suite de la description, le terme loi de focalisation désignera d'une façon générale un ensemble de retards à appliquer à différents éléments d'un transducteur, lesdits retards apportant leur contribution soit en déflexion, soit en focalisation, soit en déflexion et focalisation sur le faisceau final généré par le transducteur.

La figure 8 illustre le fait qu'une combinaison des principes de focalisation électronique et de déflexion électronique permet d'obtenir, à partir d'une loi de focalisation 800 appropriée, un faisceau ultrasonore 801, synthétisé par le groupe 604 d'éléments indépendants 600 consécutifs du transducteur rectiligne 601, focalisé vers un point 802 déplacé par rapport au point de focalisation 603 de la figure 6 grâce au principe de déflexion électronique.

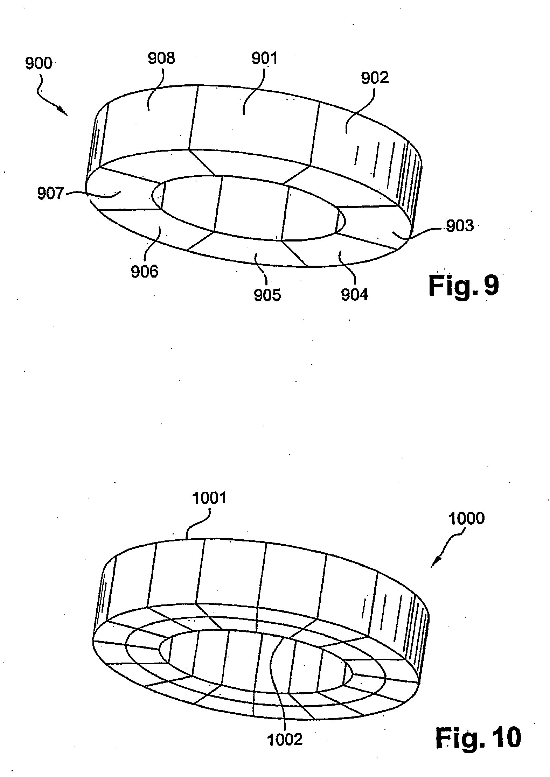

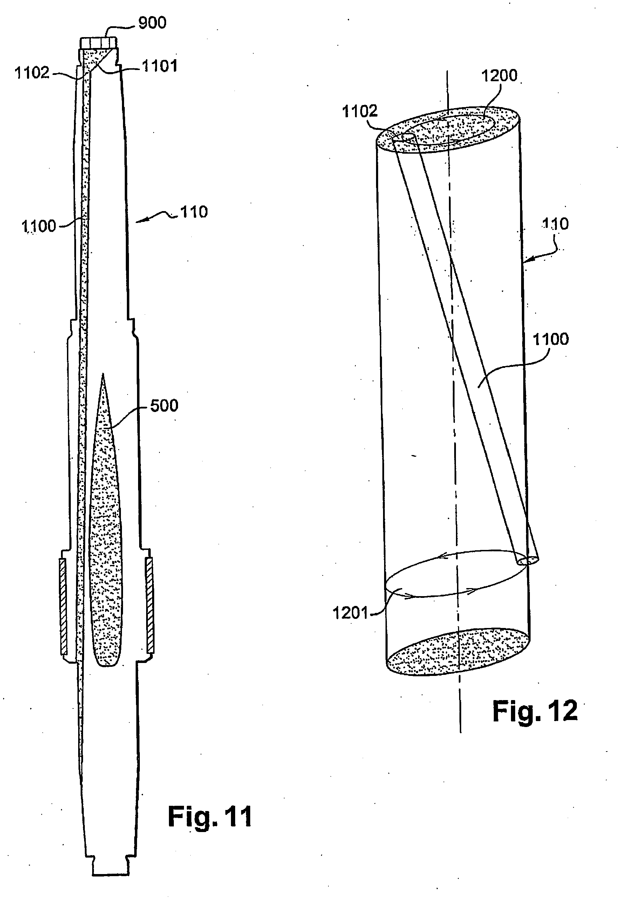

Pour la mise en oeuvre du procédé selon l'invention, on propose d'utiliser les principes de focalisation électronique et de déflexion électronique qui viennent d'être décrits sur un transducteur annulaire multiéléments, dont un premier exemple simplifié de réalisation 900 est donné à la figure 9. Le transducteur 900 est constitué de huit éléments indépendants consécutifs répartis régulièrement dans la totalité du volume constituant le transducteur, respectivement référencés 901 à 908. Un tel transducteur permet notamment de générer un faisceau final 1100, visible à la figure 11, de forme globalement cylindrique.

Pour obtenir un tel faisceau, on peut par exemple utiliser une loi de focalisation, comparable à la loi de focalisation 800 de la figure 8 ; une telle loi de focalisation est rapportée sur quatre premiers éléments consécutifs du transducteur, lesdits quatre premiers éléments constituant une première moitié du transducteur ; la même loi de focalisation est simultanément appliquée sur quatre derniers éléments consécutifs du transducteur, symétriques des quatre premiers éléments du transducteur. Ainsi, un tel exemple de loi de focalisation consiste à émettre les faisceaux ultrasonores élémentaires associés à chaque élément 901 à 908 en respectant les ordres d'émission suivant :
- dans un premier temps, exciter simultanément ou presque (c'est à dire avec un retard d'excitation inférieur à 100 ns (nanosecondes)) l'élément 901 et l'élément 908 ; les faisceaux élémentaires ainsi produits interviennent de façon prépondérante dans l'obtention d'une déflexion du faisceau final synthétisé selon une direction 1101 ;
- dans un deuxième temps, exciter simultanément ou presque les éléments 902 et 907, puis les éléments 904 et 905 ; les faisceaux élémentaires ainsi produits contribuent également à la déflexion du faisceau final synthétisé, et à l'obtention d'une tache de focalisation 1102 globalement circulaire ;
- enfin, dans un troisième temps, exciter simultanément ou presque les éléments 903 et 906. Les faisceaux élémentaires générés par ces deux derniers éléments seront alors physiquement concentrés vers la tache de focalisation 1102, du fait de l'encombrement énergétique de l'espace avoisinant dû aux faisceaux ultrasonores élémentaires dont le début d'émission est antérieur au début d'émission des éléments 903 et 906, mais qui sont encore en cours d'émission lors de l'émission des faisceaux élémentaires associés aux éléments 903 et 906. Ainsi concentrés dès leur production au niveau des éléments 903 et 906, les faisceaux élémentaires produits par ces deux éléments sont aptes à se diffuser profondément dans l'axe d'entraînement 110 ; la forme qu'ils adoptent au-delà de la tache de focalisation 1102 est globalement cylindrique, grâce à la forme globalement cylindrique de l'arbre 110 dans lequel ils sont projetés, forme cylindrique de l'arbre qui empêche à ces faisceaux élémentaires de diverger. Un tel phénomène est connu sous l'appellation d'effet cylindre.

La figure 10 donne un deuxième exemple 1000 de réalisation d'un transducteur annulaire utilisé dans certains modes de mise en oeuvre du procédé selon l'invention. Le transducteur 1000 est constitué de trente-deux éléments indépendants répartis en deux anneaux concentriques : un premier anneau 1001, comportant 16 éléments, constitue la périphérie du transducteur 1000. Sa fonction est de générer un faisceau ultrasonore intermédiaire au sein duquel sera synthétisé le faisceau ultrasonore final, produit par un deuxième anneau 1002 comportant également 16 éléments et placé à proximité du centre du transducteur annulaire 100. Le faisceau ultrasonore intermédiaire sert alors notamment à compenser les changements de section de l'arbre à contrôler; en effet, de tels changements de section peuvent provoquer, à leur niveau, de légères déformations du faisceau final synthétisé, rendant ce dernier alors moins cylindrique. Pour parfaire la forme cylindrique du faisceau final, on prévoit donc la production d'un faisceau intermédiaire présentant une partie centrale creuse et cylindrique, faisant ainsi mieux bénéficier le faisceau final de l'effet cylindre.

Dans le procédé selon l'invention, on peut ainsi générer des faisceaux ultrasonores qui sont :
- défléchis selon un angle recherché, l'angle adopté par le faisceau final dépendant essentiellement, en se référant au premier exemple de transducteur 900, du retard appliqué entre les éléments 901 et 908 et les autres éléments. La déflexion peut ainsi être modulée à souhait pour aller sonder l'ensemble de la partie basse de l'arbre avec le même transducteur, par modification partielle des retards électroniques de la loi de focalisation ;
- de section constante et de diamètre inférieur au tiers du diamètre de la section de l'arbre dans laquelle se trouve la zone à contrôler, ce qui confère au faisceau final une densité énergétique importante à longue distance, en profitant de la géométrie cylindrique de l'arbre.

D'une façon générale, dans l'invention, les retards appliqués sur les différents éléments constituant le transducteur intervenant, pour générer un faisceau final donné, sont tels que leur somme est inférieure à la durée pendant laquelle chacun desdits éléments émet son faisceau élémentaire ; le faisceau final de forme globalement cylindrique obtenu est ainsi la résultante d'une coexistence spatiale de l'ensemble des faisceaux élémentaires tirés, émis, par l'ensemble des éléments constituant le transducteur, les différents tirs ayant été initiés en respectant les retards dictés par la loi de focalisation appliquée.

La perte d'énergie entre l'aller et le retour du faisceau final est minime car ce dernier évite la zone d'hétérogénéités 500 présentes dans la partie centrale de l'arbre 110 ; la faible section du faisceau final par rapport au diamètre des zones contrôlées permet une bonne résolution de la taille et de la forme du défaut, ainsi qu'une localisation précise par la rotation graduelle du capteur sur lui-même. Toujours pour des raisons de forte densité énergétique du faisceau final synthétisé, l'énergie incidente permet de déceler par diffraction la présence de fissures axiales. En d'autres termes, le faisceau cylindrique ultrasonore obtenu dans le procédé selon l'invention est fortement énergétique à longue distance, ce sui permet d'opérer non seulement en réflexion d'onde, mais aussi en diffraction sur les défauts observés du type fonds de fissure.

Dans un premier exemple de mise en oeuvre du procédé selon l'invention, les retards relatifs entre les impulsions d'émission appliqués à chacun des éléments composent une loi de focalisation fixe, statique. Comme illustré à la figure 12, le transducteur 900 est entraîné en rotation 1200 mécanique sur lui-même, par exemple au moyen d'un dispositif d'entraînement en rotation de type moteur non représenté, pour balayer une périphérie 1201 de la zone de l'arbre 110 à la distance désirée.

Dans un deuxième exemple de mise en oeuvre du procédé selon l'invention, la rotation mécanique peut être remplacée, en maintenant le transducteur 900 immobile au niveau de l'extrémité accessible de l'arbre à contrôler, par un balayage électronique circulaire appliqué successivement aux différents éléments ; une telle mise en oeuvre peut s'avérer intéressante notamment si l'encombrement ambiant ne permet pas l'utilisation du dispositif d'entraînement en rotation. Une telle mise en oeuvre ne permet cependant d'obtenir qu'une précision angulaire moins fine que celle disponible avec le premier exemple de mise en oeuvre.

Les besoins actuels concernent les arbres en acier inoxydable forgés jusqu'à 3,5 mètres de long et 0,4 m de diamètre. Si nécessaire les transducteurs intervenant dans le procédé selon l'invention peuvent être adapté pour le contrôle de pièces plus importantes.

## Revendications

1. Procédé de contrôle d'un arbre d'entraînement (110) d'une machine tournante, ledit arbre étant plein, de forme globalement cylindrique **caractérisé en ce que** le procédé comporte les différentes étapes consistant à :
- disposer, au niveau d'une extrémité de l'arbre à contrôler, un transducteur annulaire (900 ;1000) constitué d'une pluralité d'éléments indépendants, chaque élément étant apte à au moins émettre un faisceau élémentaire ultrasonore en ondes longitudinales dans l'arbre d'entraînement ;
- appliquer une première loi de focalisation, préalablement déterminée, à au moins une partie des éléments constituant le transducteur annulaire, la première loi de focalisation consistant en un ensemble de retards en émission à respecter entre les différents éléments du transducteur, pour générer un premier faisceau final (1100) de forme globalement cylindrique et défléchi selon un angle recherché pour cibler un premier secteur particulier de l'arbre d'entraînement à contrôler.

2. Procédé selon la revendication précédente, **caractérisé en ce qu'**il comporte l'étape supplémentaire consistant à modifier la première loi de focalisation pour obtenir une deuxième loi de focalisation générant un deuxième faisceau final pour cibler un deuxième secteur particulier de l'arbre d'entraînement à contrôler.

3. Procédé selon l'une au moins des revendications précédentes **caractérisé en ce qu'**il comporte l'étape supplémentaire consistant à faire évoluer en rotation, au moyen d'un moteur et autour d'un axe central de l'arbre d'entraînement, le transducteur annulaire.

4. Procédé selon l'une au moins des revendications 1 ou 2 **caractérisé en ce qu'**il comporte l'étape supplémentaire consistant à appliquer la première loi de focalisation à plusieurs reprises, en décalant, à chaque reprise, d'au moins un même nombre d'éléments chaque retard de ladite loi de focalisation.

5. Procédé selon l'une au moins des revendications précédentes **caractérisé en ce que** le transducteur annuaire intervenant dans ledit
procédé comporte huit éléments (901 à 908) indépendants répartis en un unique anneau.

6. Procédé selon la revendication précédente **caractérisé en ce qu'**il comporte l'étape complémentaire consistant à :
- appliquer un premier retard sur un premier élément (901) et un deuxième retard sur un deuxième élément (908), le deuxième retard étant supérieur ou égal au premier retard ;
- appliquer un troisième retard sur un troisième élément (902), un quatrième retard sur un quatrième élément (907), un cinquième retard sur un cinquième élément (904), un sixième retard sur un sixième élément (905), le sixième retard étant égal au cinquième retard, lui-même supérieur au quatrième retard, lui-même égal au troisième retard, lui-même supérieur au deuxième retard ;
- appliquer un septième retard sur un septième élément (903), et un huitième retard sur un huitième élément (906), le huitième retard étant égal au septième retard, lui-même supérieur au sixième retard, pour générer un septième faisceau élémentaire et un huitième faisceau élémentaire, concentré vers une tache de focalisation circulaire (1102), et créer ainsi, en aval de la tache de focalisation, le faisceau final de forme globalement cylindrique.

7. Procédé selon la revendication précédente **caractérisé en ce que** le premier élément, le troisième élément, le septième élément et le cinquième élément sont placés consécutivement sur une première moitié du transducteur annulaire, en étant respectivement symétriques, par rapport à un plan perpendiculaire à une surface d'émission du transducteur circulaire et centré sur ledit transducteur, au deuxième élément, au quatrième élément, au huitième élément et au sixième élément.

8. Procédé selon l'une au moins des revendications 1 à 4 **caractérisé en ce que** le transducteur annulaire intervenant dans ledit procédé comporte un premier anneau externe (1001), disposé en périphérie du transducteur, et un second anneau interne (1002), disposé à proximité du centre du transducteur, le premier anneau et le second anneau étant concentriques.

9. Procédé selon la revendication précédente **caractérisé en ce que** le transducteur annulaire comporte trente deux éléments indépendants, le premier anneau et le second anneau comportant chacun seize éléments.

10. Procédé selon l'une au moins des revendications précédentes **caractérisé en ce que** les retards appliqués pour générer deux faisceaux élémentaires consécutifs sont de l'ordre d'une centaine de nanosecondes.

11. Procédé selon l'une au moins des revendications précédentes **caractérisé en ce que** la somme des retards constituant l'ensemble des retards de la première loi de focalisation est inférieure à une durée d'émission du faisceau élémentaire émis par chaque élément constituant le transducteur annulaire.

12. Procédé selon l'une au moins des revendications précédentes **caractérisé en ce que** l'arbre d'entraînement est un arbre de roue d'une pompe primaire de réacteur nucléaire.

## Claims

1. A method for controlling a drive shaft (110) of a rotating machine, said shaft being solid and basically cylindrical in shape, **characterised in that** the method comprises various steps consisting of:
- placing, in the vicinity of the tip of the shaft to be controlled, an annular transducer (900, 1000) comprised of a plurality of separate elements, each element being able to at least emit an elementary ultrasonic longitudinal wave beam inside the drive shaft;
- applying a first pre-determined focus law to at least one part of the elements constituting the annular transducer, the first focus law consisting of a series of emission delays to be observed between the various elements of the transducer, in order to generate a first basically cylindrical-shaped final beam (1100), deflected according to a given angle for the purpose of targeting a first particular sector of the drive shaft to be controlled

2. A method according to the previous claim, **characterised in that** it comprises an additional step, consisting of modifying the first focus law in order to obtain a second focus law generating a second final beam for the purpose of targeting a second particular sector of the drive shaft to be controlled.

3. A method according to at least one of the preceding claims, **characterised in that** it comprises an additional step, consisting of inducing rotation of the annular transducer around a central axis of the drive shaft by means of a motor.

4. A method according to at least one of the claims 1 or 2, **characterised in that** it comprises an additional step consisting of applying, several times over, the first focus law by shifting, each time, at least a same number of elements of said focus law for each delay.

5. A method according to at least one of the previous claims, **characterised in that** the annular transducer used in said method comprises eight separate elements (901 to 908) arranged into a single ring.

6. A method according to the previous claim, **characterised in that** it comprises an additional step consisting of:
- applying a first delay on a first element (901) and a second delay on a second element (908), the second delay being equal to or exceeding the first delay;
- applying a third delay on a third element (902), a fourth delay on a fourth element (907), a fifth delay on a fifth element (904), a sixth delay on a sixth element (905), the sixth delay being equal to the fifth delay, the latter exceeding the fourth delay, itself exceeding the third delay, which then exceeds the second delay;
- applying a seventh delay on a seventh element (903), and an eighth delay on an eighth element (906), the eighth delay being equal to the seventh delay, the latter exceeding the sixth delay, in order to generate a seventh elementary beam and an eighth elementary beam, centred on a circular focussing task (1102), thereby creating, downstream of the focussing task, the basically cylindrical-shaped final beam.

7. A method according to the previous claim, **characterised in that** the first element, the third element, the seventh element and the fifth element are placed consecutively on a first half of the annular transducer, by being respectively symmetrical, in relation to a plan perpendicular to an emission surface of the circular transducer and centred on said transducer, to the second element, to the fourth element, to the eighth element and to the sixth element.

8. A method according to at least one of the claims 1 to 4, **characterised in that** the annular transducer used in said method comprises a first external ring (1001), placed on the outer part of the transducer, and a second internal ring (1002), placed near the centre of the transducer, the first ring and the second ring being concentric.

9. A method according to the previous claim, **characterised in that** the annular transducer comprises thirty-two separate elements, the first ring and the second ring comprising sixteen elements each.

10. A method according to at least one of the previous claims, **characterised in that** the delays applied for the purpose of generating two consecutive elementary beams correspond to approximately one hundred nanoseconds.

11. A method according to at least one of the preceding claims, **characterised in that** the sum of the delays comprising the series of delays of the first focus law is lower than the duration of an elementary beam emission produced by each element constituting the annular transducer.

12. A method according to at least one of the previous claims, **characterised in that** the drive shaft is a wheel shaft of a nuclear reactor primary pump.

## Patentansprüche

1. verwahren zur Prüfung einer Antriebswelle (110) einer drehenden Maschine, wobei die besagte Welle voll ist, und eine allgemein zylindrische Form aufweist, **dadurch gekennzeichnet, dass** das Verfahren verschiedene Schritte enthält, die darin bestehen:
- an einem Ende der zu prüfenden Welle einen Ringwandler (900; 1000) anzubringen, der sich aus mehreren unabhängigen Elementen zusammensetzt, wobei jedes Element zumindest in der Lage ist, ein Ultraschall-Elementarbündel in Form von Longitudinalwellen in die Antriebswelle auszusenden;
- ein erstes zuvor festgelegtes Fokussierungsgesetz auf zumindest einen Teil der Elemente anzuwenden, die den Ringwandler bilden, wobei das erste Fokussierungsgesetz aus einer Einheit an Aussendungsverzögerungen besteht, die zwischen den verschiedenen Elementen des Wandlers zu berücksichtigen sind, um ein erstes Endbündel (1100) zu generieren, das eine allgemein zylindrische Form aufweist und nach einem angestrebten Winkel abgelenkt wird, um auf einen ersten charakteristischen Sektor der zu prüfenden Antriebswelle abzuzielen.

2. Verfahren nach dem vorherigen Anspruch, **dadurch gekennzeichnet, dass** es den zusätzlichen Schritt enthält, der darin besteht, das erste Fokussierungsgesetz zu verändern, um ein zweites Fokussierungsgesetz zu erhalten, das ein zweites Endbündel generiert, um auf einen zweiten charakteristischen Sektor der zu prüfenden Antriebswelle abzuzielen.

3. Verfahren nach zumindest einem der vorherigen Ansprüche, **dadurch gekennzeichnet, dass** es den zusätzlichen Schritt enthält, der darin besteht, den Ringwandler mit einem Motor um eine Mittelachse der Antriebswelle in Rotation zu versetzen.

4. Verfahren nach zumindest einem der Ansprüche 1 oder 2, **dadurch gekennzeichnet, dass** es den zusätzlichen Schritt enthält, der darin besteht, das erste Fokussierungsgesetz mehrmals anzuwenden, indem man jede Verzögerung des besagten Fokussierungsgesetzes bei jeder Anwendungswiederholung um zumindest eine selbe Anzahl an Elementen versetzt.

5. Verfahren nach zumindest einem der vorherigen Ansprüche, **dadurch gekennzeichnet, dass** der Ringwandler, der beim besagten Verfahren zum
Einsatz kommt, acht unabhängige Elemente (901 bis 908) enthält, die auf einen einzigen Ring aufgeteilt sind.

6. Verfahren nach dem vorherigen Anspruch, **dadurch gekennzeichnet, dass** es einen ergänzenden Schritt enthält, der darin besteht,
- eine erste Verzögerung auf ein erstes Element (901) und eine zweite Verzögerung auf ein zweites Element (908) anzuwenden, wobei die zweite Verzögerung größer oder gleich der ersten Verzögerung ist;
- eine dritte Verzögerung auf ein drittes Element (902), eine vierte Verzögerung auf ein viertes Element (907), eine fünfte Verzögerung auf ein fünftes Element (904), eine sechste Verzögerung auf ein sechstes Element (905) anzuwenden, wobei die sechste Verzögerung gleich der fünften Verzögerung ist, die selbst wiederum größer als die vierte Verzögerung ist, die selbst gleich der dritten Verzögerung ist, die wiederum größer als die zweite Verzögerung ist;
- eine siebte Verzögerung auf ein siebtes Element (903), und eine achte Verzögerung auf ein achtes Element (906) anzuwenden, wobei die achte Verzögerung gleich der siebten Verzögerung ist, die selbst wiederum größer als die sechste Verzögerung ist, um ein siebtes Elementarbündel und ein achtes Elementarbündel zu generieren, das sich auf einen kreisförmigen Fokussierungsfleck (1102) konzentriert, um somit unterhalb des Fokussierungsflecks das allgemein zylindrische Endbündel zu bilden.

7. Verfahren nach dem vorherigen Anspruch, **dadurch gekennzeichnet, dass** das erste Element, das dritte Element, das siebte Element und das fünfte Element nacheinander auf einer ersten Hälfte des Ringwandlers angeordnet sind, wobei sie in Bezug auf eine Ebene, die normal zur Aussendungsfläche des Ringwandlers steht, und sich mittig auf dem besagten Wandler befindet, jeweils symmetrisch zum zweiten Element, zum vierten Element, zum achten Element und zum siebten Element stehen.

8. Verfahren nach zumindest einem der Ansprüche 1 bis 4, **dadurch gekennzeichnet, dass** der Ringwandler, der bei dem besagten Verfahren zur Anwendung kommt, einen ersten externen Ring (1001) enthält, der an der Peripherie des Wandlers angeordnet ist, und einen zweiten inneren Ring (1002), der in der Nähe der Mitte des Wandlers angeordnet ist, und der erste und der zweite Ring konzentrisch angeordnet sind.

9. Verfahren nach dem vorherigen Anspruch, **dadurch gekennzeichnet, dass** der Ringwandler 32 unabhängige Elemente enthält, und der erste und der zweite Ring jeweils 16 Elemente enthalten.

10. Verfahren nach zumindest einem der vorherigen Ansprüche, **dadurch gekennzeichnet, dass** sich die angewandten Verzögerungen zum Generieren zweier aufeinander folgender Elementarbündel in der Größenordnung von etwa 100 Nanosekunden bewegen.

11. Verfahren nach zumindest einem der vorherigen Ansprüche, **dadurch gekennzeichnet, dass** die Summe der Verzögerungen, die die Gesamtheit der Verzögerungen des ersten Fokussierungsgesetzes bilden, kleiner ist, als die Aussendungsdauer des Elementarbündels, das von jedem Element ausgesandt wird, aus dem sich der Ringwandler zusammensetzt.

12. Verfahren nach zumindest einem der vorherigen Ansprüche, **dadurch gekennzeichnet, dass** die Antriebswelle eine Welle des Rades einer Primärpumpe eines Atomreaktors ist.
